# EUROPÄISCHE PATENTANMELDUNG

(11) **EP 2 905 067 A1**
(43) Veröffentlichungstag der Anmeldung: **12.08.2015**
(21) Anmeldenummer: 15150642.5
(22) Anmeldetag: 09.01.2015
(51) Int. Cl.: B01D 63/08, B01D 63/16, B01D 65/08

(54) **Dynamische Querstromfiltrationsvorrichtung zum Filtrieren einer Flüssigkeit-Feststoff-Suspension und Verfahren zum Betreiben derselben**

(30) Priorität: 06.02.2014 DE 102014101499
(71) Anmelder: Andritz KMPT GmbH, 85256 Vierkirchen (DE)
(72) Erfinder: Grim, Gunnar, 85258 Weichs (DE)
(74) Vertreter: Viering, Jentschura & Partner Patent- und Rechtsanwälte

(57) **Zusammenfassung**

Dynamische Querstromfiltrationsvorrichtung zum Filtrieren einer Flüssigkeit-Feststoff-Suspension und Verfahren zum Betreiben derselben, aufweisend einen Behälter 6, der einen Feed-Eintragsanschluss 8 hat, über welchen die Suspension 4 als Feed 5 in den Behälter 6 eintragbar ist, und der einen Retentat-Austragsanschluss 16 hat, über welchen die Suspension 4 als Retentat 18, welches im Rahmen eines im Behälter erfolgenden Filtrationsvorgangs von dem Feed 5 verbleibt, aus dem Behälter austragbar ist, und der einen Permeat-Austragsanschluss 22 hat, über welchen das Permeat 24, welches im Rahmen des im Behälter erfolgenden Filtrationsvorgangs aus der Suspension heraus filtriert wird, aus dem Behälter austragbar ist, und eine Filtermembran-Anordnung 50, die im Behälter angeordnet ist und die eine Mehrzahl von Filtermembranen 52 zum Durchführen des Filtrationsvorgangs hat, die mit dem Permeat-Austragsanschluss 22 fluidverbunden sind und die in Richtung vom Feed-Eintragsanschluss 8 aus zum Retentat-Austragsanschluss 16 hin aufeinanderfolgend angeordnet sind, um dementsprechend aufeinanderfolgend von der Suspension umströmt zu werden.

## Beschreibung

Die Erfindung betrifft eine dynamische Querstromfiltrationsvorrichtung zum Filtrieren einer Flüssigkeit-Feststoff-Suspension sowie ein Verfahren zum Betreiben derselben.

Bei der dynamischen Querstromfiltration werden Filtrationsmembranen und/oder damit kämmende Kammelemente, die ebenfalls als Filtrationsmembrane ausgebildet sein können, relativ zu einer zu filternden Suspension und ggf. relativ zueinander bewegt, um dadurch die Filtrationsmembranen während des laufenden, regulären Filtrationsbetriebs zu reinigen bzw. von Feststoffrückständen zu befreien, um dadurch Wartungs- und Reinigungsintervalle, in welchen die Vorrichtung abgeschaltet und zur Wartung/Reinigung ggf. auseinandergebaut werden muss, zu verlängern.

Eine solche dynamische Querstromfiltrationsvorrichtung ist zum Beispiel aus der WO 2011/033537 A1 bekannt.

Durch die Erfindung wird eine dynamische Querstromfiltrationsvorrichtung geschaffen, welche eine weiter erhöhte Filtrationseffizienz hat und mit der eine verbesserte Produktqualität erreichbar ist.

Die Erfindung stellt eine dynamische Filtrationsvorrichtung zum Filtrieren einer Flüssigkeit-Feststoff-Suspension bereit, welche aufweist einen Behälter, z.B. einen geschlossenen Behälter, wie z.B. einen Stahlbehälter, mit z.B. einer von einem Deckel verschlossenen Öffnung, wobei der Behälter einen Feed-Eintragsanschluss hat, über welchen die Suspension in Form von bzw. in Form eines Feeds in den Behälter eintragbar ist (d.h., die Suspension liegt vor einem Filtrationsvorgang als Feed, z.B. in der Beschaffenheit eines Feeds, vor), wobei die in Form von Feed vorliegende Suspension bzw. das Feed z.B. über eine Feed-Zuführleitung aus einem Feed-Reservoir zu dem Feed-Eintragsanschluss, z.B. mittels einer Pumpe, zugeführt wird, und wobei der Behälter einen Retentat-Austragsanschluss hat, über welchen die Suspension in Form eines Retentats bzw. dieses Retentat, welches im Rahmen eines im Behälter erfolgenden Filtrationsvorgangs von dem Feed verbleibt, aus dem Behälter austragbar ist und z.B. von dort über eine Retentat-Abführleitung abgeführt wird, um entsorgt zu werden, und wobei der Behälter einen Permeat-Austragsanschluss hat, über welchen das Permeat, welches im Rahmen des im Behälter erfolgenden Filtrationsvorgangs aus der Suspension heraus filtriert wird, aus dem Behälter austragbar ist und z.B. von dort über eine Permeat-Abführleitung weitertransportiert wird, um z.B. weiterverarbeitet, wie z.B. abgefüllt zu werden.

Die dynamische Querstromfiltrationsvorrichtung gemäß der Erfindung weist weiter auf eine Filtermembran-Anordnung, die im Behälter angeordnet ist und die eine Mehrzahl von Filtermembranen zum Durchführen des Filtrationsvorgangs hat, die mit dem Permeat-Austragsanschluss fluidverbunden sind und die in Richtung vom Feed-Eintragsanschluss aus zum Retentat-Austragsanschluss hin, d.h. in Durchströmungsrichtung gesehen (Richtung, in welche die Suspension den Behälter durchströmt), aufeinanderfolgend angeordnet sind, um dementsprechend aufeinanderfolgend von der Suspension umströmt zu werden, eine Steuereinrichtung, z.B. eine elektronische Steuereinrichtung, zum Steuern des Betriebs, z.B. des Filtrationsbetriebs, der Querstromfiltrationsvorrichtung, und eine Membran-Reinigungseinrichtung zum Reinigen der Filtermembranen während des regulären Filtrationsbetriebs, welche aufweist eine Bewegungseinrichtung, welche mit der Filtermembran-Anordnung verbunden ist, um die Filtermembranen während des regulären Filtrationsbetriebs, z.B. permanent, relativ zu der (im Behälter vorliegenden) Suspension bewegen zu können, und/oder welche aufweist eine Kammeinrichtung mit einer Mehrzahl von Kammelementen, die mit den Filtermembranen kämmen (d.h. z.B., dass die Kammelemente und die Filtermembranen kammartig abwechselnd ineinandergreifen bzw. miteinander im Eingriff sind), und eine Bewegungseinrichtung, die mit der Filtermembran-Anordnung und/oder mit der Kammeinrichtung verbunden ist, um die Filtermembranen und/oder die Kammelemente während des regulären Filtrationsbetriebs, z.B. permanent, relativ zueinander (und damit auch relativ zu der im Behälter vorliegenden Suspension) bewegen zu können, wobei der Feed-Eintragsanschluss und der Retentat-Austragsanschluss im Wesentlichen nicht, optional nicht, oder zumindest im regulären Filtrationsbetrieb im Wesentlichen nicht, optional nicht, miteinander verbunden sind, sodass im Wesentlichen keine, optional keine, oder zumindest im regulären Filtrationsbetrieb im Wesentlichen keine, optional keine, Retentat-Rezirkulation stattfindet, wodurch im regulären Filtrationsbetrieb ausgehend von der dem Feed-Eintragsanschluss nächstliegenden Filtermembran bis zu der dem Retentat-Austragsanschluss nächstliegenden Filtermembran ein im Wesentlichen gradueller Anstieg der Feststoff-Konzentration der Suspension im Behälter vorliegt.

Die Aspekte "im Wesentlichen keine Verbindung" bzw. "im Wesentlichen keine Retentat-Rezirkulation" sind hier z.B. derart zu verstehen, dass ein solches minimales, z.B. ständiges oder nur zeitweises, Rückführen/Rezirkulieren von Retentat zu dem Feed-Eintragsanschluss (z.B. über einen prozesstechnisch vernachlässigbar kleinen Schlauch), z.B. welches prozesstechnisch praktisch keinen Einfluss auf den gewünschten bzw. angestrebten Gradienten der Feststoff-Konzentration hat, auch noch als in diesem Sinne "keine Verbindung" bzw. "keine Rezirkulation" zu verstehen ist. Bei der genannten, im Wesentlichen nicht gewünschten, Verbindung zwischen dem Feed-Eintragsanschluss und dem Retentat-Austragsanschluss kann es sich um eine direkte Verbindung, bei der z.B. eine Retentat-Abführleitung direkt mit der Feed-Zuführleitung verbunden ist, z.B. über eine Abzweigung, oder um eine indirekte Verbindung handeln, bei der z.B. die Retentat-Abführleitung zu einem Feed-Reservoir führt oder dorthin eine Abzweigung hat.

Der Aspekt, dass es um einen "im Wesentlichen graduellen Anstieg" handelt, ist z.B. derart zu verstehen, dass sich prozesstechnisch z.B. Konzentrationsverläufe einstellen, bei denen bestimmte Abschnitte relativ konstante Feststoff-Konzentrationen oder ggf. auch Abschnitte mit abfallender Feststoff-Konzentration vorliegen können. Letzeres kann z.B. auftreten, wenn in der Filtermembran-Anordnung, z.B. in der Mitte zwischen dem Feed-Eintragsanschluss und dem Retentat-Austragsanschluss, eine Waschmittel/Reinigungsmittel einbringende Vorrichtung vorgesehen ist, wobei das eingebrachte, z.B. temporär oder ständig eingebrachte Waschmittel, dann an diese Stelle lokal zu einer verringerten Feststoff-Konzentration führt. Der graduelle Anstieg verläuft in der Regel ansonsten z.B. stufenförmig von Filtrationsmembran zu Filtrationsmembran.

Die Steuereinrichtung ist zum Beispiel mit der Bewegungsvorrichtung verbunden, um diese zu steuern, und hat zum Beispiel diverse Sensoren, wie z.B. Drucksensoren und Drehmomentsensoren, zum Erfassen von Prozessparametern, wie z.B. dem Druck in einer Permeat-Abführleitung, dem Druck in einer Feed-Zuführleitung, dem Druck in einer Retentat-Abführleitung, dem Drehmoment eines Antriebsmotors der Bewegungsvorrichtung und dergleichen Sensoren. Im Betrieb wird z.B. zwischen einer Anlaufphase und einem regulären Filtrationsbetrieb unterschieden. In der Anlaufphase wird der Behälter anfänglich mit Suspension in Form des Feeds befüllt, sodass in der Anlaufphase noch nicht der graduell ansteigende Feststoffgehalt in der sich im Behälter befindenden Suspension vorliegt. Im Laufe der Anlaufphase stellt sich dann nach kurzer Zeit der gewünschte Gradient der Feststoff-Konzentration der Suspension im Behälter ein und/oder wird durch Steuerung/Regelung der Filtrationsvorrichtung eingestellt (wie weiter unten noch beschrieben wird), wodurch z.B. der reguläre Filtrationsbetrieb erreicht ist.

Während der Phase des regulären Filtrationsbetriebs wird ferner temporär, z.B. in bestimmten, z.B. im Wesentlichen regulären, Intervallen, ein Umkehrbetrieb gefahren, in welchem das Permeat kurzfristig im Umkehrfluss ist. Die Zeitdauer des Umkehrflusses wird z.B. derart kurz gehalten, dass der Permeat-Umkehrfluss nahezu keine Auswirkungen auf den Gradienten der Feststoff-Konzentration bzw. des Feststoffgehalts der sich im Behälter befindlichen Suspension hat. Der Umkehrfluss kann z.B. mittels eines Absperrventils in einer an den Permeat-Austragsanschluss angeschlossenen Permeat-Abführleitung erreicht werden. Wenn das Absperrventil geschlossen wird, dann erhöht sich der Druck auf der Permeat-Abführseite des Behälters, wodurch es zu der Strömungsumkehr kommt. Das Absperrventil ist z.B. mit der Steuereinrichtung verbunden, von welcher das Absperrventil gemäß einem vorbestimmten Plan, z.B. wie oben genannt periodisch, zum Schließen und Öffnen angesteuert wird.

Die Erfinder haben erkannt, dass mit der beanspruchten dynamischen Querstromfiltrationsvorrichtung ein Retentat mit einem gewünschten hohen Feststoffgehalt bzw. einer gewünschten hohen Feststoffkonzentration bereits bei einem einzigen Filtrationsdurchlauf durch die Filtermembran-Anordnung erreicht werden kann. Indem damit bei der erfindungsgemäßen Querstromfiltrationsvorrichtung das Retentat nicht oder zumindest im Wesentlichen nicht wieder zu der Feed-Zuführleitung bzw. zu dem Feed-Eintragsanschluss zurückgeführt wird, d.h. nicht oder zumindest im Wesentlichen nicht rezirkuliert wird, ist die Filtrationseffizienz erhöht, wobei die Vorrichtung auch mit stark verringerter Pumpleistung ausgelegt werden kann. Ferner kann auch die Produktqualität verbessert werden, weil z.B. ggf. unnötige Bewegungen der Suspension, die z.B. unerwünschten Sauerstoffeintrag in die Flüssigkeit mit sich bringen, in stärkerem Maße vermieden sind, weil die Suspension nur einmal in den Behälter gefördert bzw. gepumpt werden muss.

Die dynamische Querstromfiltrationsvorrichtung ist z.B. derart eingerichtet und konfiguriert, dass im regulären Filtrationsbetrieb die Feststoffkonzentration (welche z.B. Massen-% oder Volumen-% sein kann) der an der Erfassungsposition vorliegenden Suspension wenigstens (z.B. ungefähr) 5% relativ gegenüber der Feststoffkonzentration des in den Behälter eingetragenen Feeds erhöht ist. Z.B. kann es erwünscht sein, dass die Feststoff-Konzentration von absolut ungefähr 5-20 Volumen-% auf absolut ungefähr 80-90 Volumen% erhöht ist, was einer Relativerhöhung von ungefähr 300 - 1700% entspricht; dies kann z.B. für die Weinherstellung relevant sein. Es kann z.B. auch eine Erhöhung der Feststoff-Konzentration von absolut ungefähr 45 Massen-% auf absolut ungefähr 55 Massen-% erwünscht sein, was einer Relativerhöhung von ungefähr 22,2% entspricht; dies kann z.B. für die Latex-Herstellung relevant sein.

Die Querstromfiltrationsvorrichtung weist z.B. ferner auf eine Suspensionscharakteristik-Erfassungsvorrichtung, mittels deren eine z.B. zur Feststoffkonzentration der Suspension korrelierende Suspensionscharakteristik lokal an einer Erfassungsposition erfassbar ist, welche im Behälter im Bereich des ausgehend von dem Feed-Eintragsanschluss aus zum Retentat-Austragsanschluss hin gesehen letzten Viertels der Mehrzahl der Filtermembranen und/oder im Behälter im Bereich des Retentat-Austragsanschlusses, optional benachbart zu diesem, und/oder außerhalb des Behälters im Bereich des Retentat-Austragsanschlusses, optional benachbart zu diesem, und/oder außerhalb des Behälters in einer an den Retentat-Austragsanschluss angeschlossenen Retentat-Abführleitung (19) liegt, wobei die Erfassungsposition optional unmittelbar an einer ausgehend von dem Feed-Eintragsanschluss aus zum Retentat-Austragsanschluss hin gesehen letzten und/oder vorletzten Filtermembran liegt, wobei weiter optional die letzte und/oder die vorletzte, optional alle, Filtermembran/en platten- oder scheibenförmig ausgebildet ist/sind und die Erfassungsposition unmittelbar an einer stromabwärtsseitigen hinteren Fläche und/oder unmittelbar an einer radialen Stirnseite der letzten und/oder vorletzten Filtermembran liegt, wobei die Suspensionscharakteristik-Erfassungsvorrichtung mit der Steuereinrichtung verbunden ist, und die Steuereinrichtung eingerichtet ist, um auf Basis der von der Suspensionscharakteristik-Erfassungsvorrichtung erfassten Suspensionscharakteristik die Querstromfiltrationsvorrichtung zu steuern.

Die Erfinder haben erkannt, dass bei der erfindungsgemäßen Filtrationsvorrichtung aufgrund des graduell vom Feed-Eintragsanschluss aus zum Retentat-Austragsanschluss ansteigenden Feststoffgehalts der im Behälter vorliegenden Suspension, die in Durchströmungsrichtung gesehen letzten Filtermembranen aufgrund deren Bewegung oder Relativbewegung bezüglich der Suspension am stärksten (strömungs-)mechanisch belastet sind, wobei z.B. die in Durchströmungsrichtung gesehen letzte und/oder vorletzte Filtermembran am stärksten belastet sein kann. Daher zielt diese Ausführungsform darauf ab, den Feststoffgehalt der Suspension in dem oben genannten Bereich zu erfassen, um auf dieser Basis die Filtrationsvorrichtung dahingehend zu steuern, dass eine Beschädigung, z.B. eine mechanische Beschädigung, wie z.B. ein Brechen, von Filtrationsmembranen, die z.B. aus einem per se spröderen Keramik-Material hergestellt sind, zu verhindern.

Die im Behälter vorliegende Suspension stellt ihrerseits sukzessive ein jeweiliges, lokal vorliegendes Retentat mit zunehmenden Feststoffgehalt bzw. zunehmender Feststoffkonzentration dar, wobei das letztlich aus dem Behälter ausgetragene Retentat die Suspension mit dem letztlich verbleibenden Feststoffgehält bzw. der letztlich verbleibenden Feststoffkonzentration ist.

Die Suspensionscharakteristik-Erfassungsvorrichtung kann zum Beispiel derart ausgebildet sein, dass sie eine Entnahmeleitung hat, über welche Suspensionsmaterial von der Erfassungsposition aus zu einem Messsensor bringbar ist, von welchem die Suspensionscharakteristik dann erfassbar und über eine Signalleitung der Steuereinrichtung zuführbar ist. Die Entnahmeleitung kann aus dem Behälter und/oder aus der Retentat-Abführleitung herausgeführt sein und kann z.B. unmittelbar zu dem Messsensor führen.

Gemäß einer anderen Ausführungsform der Erfindung kann die Suspensionscharakteristik-Erfassungsvorrichtung z.B. einen Messsensor aufweisen, der an und/oder in der Erfassungsposition angeordnet ist, so dass mittels dessen Hilfe die Suspensionscharakteristik in situ an der Erfassungsposition erfassbar ist.

Der Messsensor kann optional ein Viskositätssensor sein, mittels dessen die Suspensionsviskosität als die Suspensionscharakteristik, z.B. (in situ) an der Erfassungsposition erfassbar ist, wobei der Viskositätssensor optional einen mechanischer Biegefühler hat, welcher aufgrund der Suspensionsströmung, z.B. an der Erfassungsposition, eine Biegung erfährt, welche erfassbar ist und aus welcher die Suspensionsviskosität ermittelbar ist. Die Biegung des Biegefühlers kann z.B. mit einem an dem Biegefühler angebrachten Dehnungs-Mess-Streifen erfasst werden. Es sind aber auch andere Messsensoren zur Erfassung der Suspensionscharakteristik heranziehbar, wie z.B. ein Feuchtigkeitssensor, der den Feuchtegehalt in der Suspension als die Suspensionscharakteristik an der Erfassungsposition misst, oder ein Dichtesensor, der die Dichte der Suspension als die Suspensionscharakteristik an der Erfassungsposition erfasst, oder irgendein anderer Typ von Sensor. Es können auch mehrere unterschiedliche Sensoren, z.B. von den vorausgehend genannten Typen, als der Messsensor dienen.

Die Erfassungsposition kann z.B. auch in einer Retentat-Abführleitung oder im Behälter jeweils unmittelbar benachbart zum Retentat-Austragsanschluss liegen.

Der Behälter kann z.B. als wenigstens zweiteiliger Behälter ausgebildet sein, z.B. mit einem ersten Behälterteil, der einen Behältertopf mit einer Öffnung bildet, und einem zweiten Behälterteil, der einen Behälterdeckel bildet, von welchem die Öffnung des Behältertopfs lösbar verschließbar ist. Die Suspensionscharakteristik-Erfassungsvorrichtung ist z.B. am Behälterdeckel angebracht, z.B. fest und damit zusammen mit diesem abnehmbar angebracht.

Die Steuereinrichtung ist z.B. derart eingerichtet ist, dass von ihr von ihr auf Basis der erfassten Suspensionscharakteristik diese Suspensionscharakteristik ihrerseits und optional damit die dazu korrelierende Feststoffkonzentration der Suspension an der Erfassungsposition einregelbar bzw. geregelt einstellbar ist und/oder dass von ihr auf Basis der erfassten Suspensionscharakteristik ein Austragmassenstrom des Retentats aus dem Behälter und/oder ein Eintragsmassenstrom des Feeds in den Behälter und/oder ein Austragmassenstrom des Permeats aus dem Behälter einstellbar ist und/oder dass von ihr, falls die erfasste Suspensionscharakteristik einen vorbestimmten Grenzwert übersteigt, der reguläre Filtrationsbetrieb der Querstromfiltrationsvorrichtung, z.B. die Bewegungseinrichtung, der Querstromfiltrationsvorrichtung langsamer betreibbar oder notabschaltbar ist.

Die oben genannten Maßnahmen stellen Möglichkeiten dar, um die genannte Beschädigung von Filtermembranen effektiv zu vermeiden. Eine erhöhte Filtrationseffizienz bei dennoch guter Betriebssicherheit kann z.B. anhand der oben genannten Suspension-Austragsmassenstromsteuerung erreicht werden.

Die Steuereinrichtung kann z.B. auch eingerichtet sein, um mit einer Heizvorrichtung zum Beheizen der Suspension verbunden zu sein, um die Temperatur der Suspension im Behälter und damit deren Viskosität als die Suspensionscharakteristik einzustellen. Die Steuereinrichtung kann auch mit einer Verdünnungsmittel-Zugabe-Einrichtung verbunden sein, über welche ein Verdünnungsmittel zu der Suspension im Behälter in einer von der Steuereinrichtung gesteuerten Weise zugebbar ist, um dadurch in Abhängigkeit der erfassten Suspensionscharakteristik diese Suspensionscharakteristik, z.B. die Viskosität und/oder die Feststoff-Konzentration, der an der Erfassungsposition vorliegenden Suspension zu regeln bzw. geregelt einzustellen.

Gemäß einer Ausführungsform der Erfindung stellt die Filtermembran-Anordnung z.B. eine erste Filtermembran-Anordnung dar, wobei die Querstromfiltrationsvorrichtung z.B. ferner die Kammeinrichtung mit einer Mehrzahl von Kammelementen, die mit den Filtermembranen kämmen (d.h., die Kammelemente und die Filtermembranen sind z.B. kammartig, abwechselnd ineinander verschachtelt angeordnet), und die Bewegungseinrichtung aufweist, die mit der Filtermembran-Anordnung und mit der Kammeinrichtung verbunden ist, wobei die Bewegungseinrichtung z.B. eine erste Drehwelle aufweist und die Filtermembranen der ersten Filtermembran-Anordnung als Filterscheiben, optional als Kreisfilterscheiben, ausgebildet sind, die auf der ersten Drehwelle hintereinander in einem jeweiligen Axialabstand voneinander drehfest angeordnet sind, wobei z.B. die Kammeinrichtung als eine zweite Filtermembran-Anordnung ausgebildet ist, wobei die Bewegungseinrichtung z.B. eine zweite Drehwelle aufweist und die Mehrzahl von Kammelementen jeweils als Filtermembranen in Form von Filterscheiben, optional als Kreisfilterscheiben, ausgebildet sind, die auf der zweiten Drehwelle hintereinander in einem jeweiligen Axialabstand voneinander drehfest angeordnet sind, und wobei die Bewegungseinrichtung einen Motor, z.B. einen Elektromotor zum Drehantreiben der ersten und der zweiten Drehwelle hat. Die Bewegungseinrichtung kann z.B. einen ersten Motor zum Drehantreiben der ersten Drehwelle und einen zweiten Motor zum Drehantreiben der zweiten Drehwelle haben.

Die erste und die zweite Drehwelle sind z.B. gleichsinnig betrieben, sodass die Filterscheiben in jenem Bereich bzw. in jenen Bereichen, in welchen sie aufgrund des Ineinandergreifens überlappt sind, gegensinnige Umfangsbewegungsrichtungen haben. Die dadurch verursachten Turbulenzen halten die Flächen der Filtermembranen bzw. der Filtermembranscheiben frei von Rückständen bzw. frei von Feststoff aus der Suspension.

Es kann aber bei dieser Ausbildung auch z.B. nur die erste Drehwelle vorgesehen sein, wobei die zweite Drehwelle z.B. durch eine feststehende Achse ersetzt ist, wobei die Ausgestaltung dieser Ausführungsform z.B. ansonsten gleich sein kann.

Die Drehwellen, d.h. z.B. die erste Drehwelle und die zweite Drehwelle, oder bei Ausgestaltung mit nur der einen Drehwelle und der feststehenden Achse dann nur die (eine) Drehwelle, können/kann in dem Behälter vertikal angeordnet sein und sich von einem unteren Behälterende zu einem oberen Behälterende erstrecken. Der Feed-Eintragsanschluss ist z.B. an dem unteren Behälterende angeordnet und der Retentat-Austragsanschluss ist z.B. an dem oberen Behälterende angeordnet.

Die Drehwellen bzw. die Drehwelle können/kann z.B. auch horizontal angeordnet sein, wobei der Feed-Eintragsanschluss z.B. an dem einen Behälterhorizontalende angeordnet ist und der Retentat-Austragsanschluss z.B. an dem anderen Behälterhorizontalende angeordnet ist. Die zuvor genannte vertikale Anordnung kann aber z.B. im Hinblick auf die Kompaktheit des Systems und die Erlangung eines gewünschten gleichmäßigen Gradienten bzw. Konzentrationsanstiegs Vorteile haben.

Die Erfassungsposition ist z.B. unmittelbar an der stromabwärtsseitigen hinteren Fläche und/oder der Stirnseite (sowie) in einem radial äußeren Bereich der letzten und/oder vorletzten Filterscheibe angeordnet. Insofern z.B. zwei Drehwellen oder die eine Drehwelle und die feststehende Achse vorhanden sind, ist die Erfassungsposition z.B. unmittelbar an der stromabwärtsseitigen hinteren Fläche und/oder der Stirnseite (sowie) in einem radial äußeren, von der jeweilig anderen Drehwelle bzw. von der feststehenden Achse abgewandten Bereich der letzten und/oder vorletzten Filterscheibe angeordnet. Die Erfassungsposition ist damit bezüglich einer Drehwelle oder einer feststehenden Achse, auf welcher die Filterscheiben (drehfest) angeordnet sind, von dem Überlappungsabschnitt der Filterscheiben mit Kammelementen abgewandt bzw. entgegengesetzt angeordnet.

Die Kammelemente können z.B. auch als koaxial zu den Filtermembranen, z.B. zu den Filterscheiben, angeordnete Rotoren ausgebildet sein, welche z.B. ihrerseits als Scheiben ausgebildet sind und/oder jeweils sichelförmige Rotorblätter haben. Hierbei können z.B. die Filtermembranen absolut drehfest (insgesamt ortsfest) auf einer, z.B. feststehenden, Achse und/oder Drehwelle ausgebildet sein, und die Rotoren sind jeweils zwischen benachbarten Filtermembranen auf der Achse und/oder Welle angeordnet und relativ zu den Filtermembranen drehend antreibbar.

Die dynamische Querstromfiltrationsvorrichtung ist z.B. zur Verwendung zum Ausfiltrieren von Weinflüssigkeit (bzw. Wein) aus (die zu filtrierende Suspension, d.h. das Feed, bildenden) Gärrückständen vorgesehen, welche im Rahmen einer Vergärung von Früchtesaft und/oder Früchtemaische bei der Weinherstellung auftreten.

Die Gärrückstände enthalten neben dem Wein, welcher z.B. Traubenwein oder Apfelwein sein kann, auch z.B. sonstige Schwebstoffe und Gärhefeteilchen. Mit der Erfindung kann damit z.B. die Produktivität bei der Weinherstellung gesteigert werden.

Gemäß einem erfindungsgemäßen Verfahren zum Betreiben einer dynamischen Querstromfiltrationsvorrichtung gemäß der in dieser Anmeldung beschriebenen Erfindung wird im Rahmen einer Anlaufphase die Querstromfiltrationsvorrichtung anhand der Steuereinrichtung derart betrieben, dass die Feststoffkonzentration der im Behälter vorliegenden Suspension (z.B. in Richtung) von der dem Feed-Eintragsanschluss nächstgelegenen Filtermembran aus zu der dem Retentat-Austragsanschluss nächstgelegenen Filtermembran im Wesentlichen graduell ansteigend eingestellt wird, bis die Feststoffkonzentration der an der Erfassungsposition vorliegenden Suspension wenigstens (z.B. ungefähr) 5% relativ gegenüber der Feststoffkonzentration des in den Behälter eingetragenen Feeds erhöht ist, und wobei im Rahmen eines sich an die Anlaufphase anschließenden regulären Filtrationsbetriebs die Querstromfiltrationsvorrichtung anhand der Steuereinrichtung derart betrieben wird, dass die im Rahmen der Anlaufphase eingestellte Feststoffkonzentration der an der Erfassungsposition vorliegenden Suspension im Wesentlichen (konstant oder innerhalb eines vorbestimmten Bereichs) aufrechterhalten wird.

Das Einstellen des Gradienten der Feststoffkonzentration der Suspension im Behälter und/oder das Aufrechterhalten der Feststoffkonzentration der an der Erfassungsposition vorliegenden Suspension werden/wird z.B. mittels Regelns des Retentat-Abführmassenstroms (bzw. der Retentat-Abführstromflussrate) durchgeführt. Alternativ oder zusätzlich können zum Einstellen des Gradienten der Feststoffkonzentration im Behälter und/oder zum Aufrechterhalten der Feststoffkonzentration der an der Erfassungsposition vorliegenden Suspension der Permeat-Austragmassenstrom (bzw. die Permeat-Austragstromflussrate) und/oder der Feed-Zuführmassenstrom (bzw. die Feed-Zuführstromflussrate) gesteuert bzw. geregelt werden. Als Regelungsorgane können z.B. Absperrventile in einer Permeat- und/oder Retentat-Abführleitung oder in einer Feed-Zuführleitung dienen, welche den Massenstrom bzw. die Flussrate durch die Steuereinrichtung gesteuert bzw. geregelt unterschiedlich begrenzen. Der Feed-Zuführmassenstrom kann auch z.B. durch Steuern bzw. Regeln einer in bzw. an einer Feed-Zuführleitung vorgesehenen Pumpe gesteuert bzw. geregelt werden.

Die Erfindung wird im Folgenden anhand bevorzugter Ausführungsbeispiele mit Bezugnahme auf die Zeichnung beschrieben. In der Zeichnung zeigen:
Figur 1 eine schematische Darstellung einer dynamischen Querstromfiltrationsvorrichtung gemäß Ausführungsbeispielen der Erfindung, und
Figur 2 ein Flussablaufdiagram eines Verfahrens zum Betreiben einer wie in dieser Anmeldung beschriebenen dynamischen Querstromfiltrationsvorrichtung gemäß einem Ausführungsbeispiel der Erfindung.

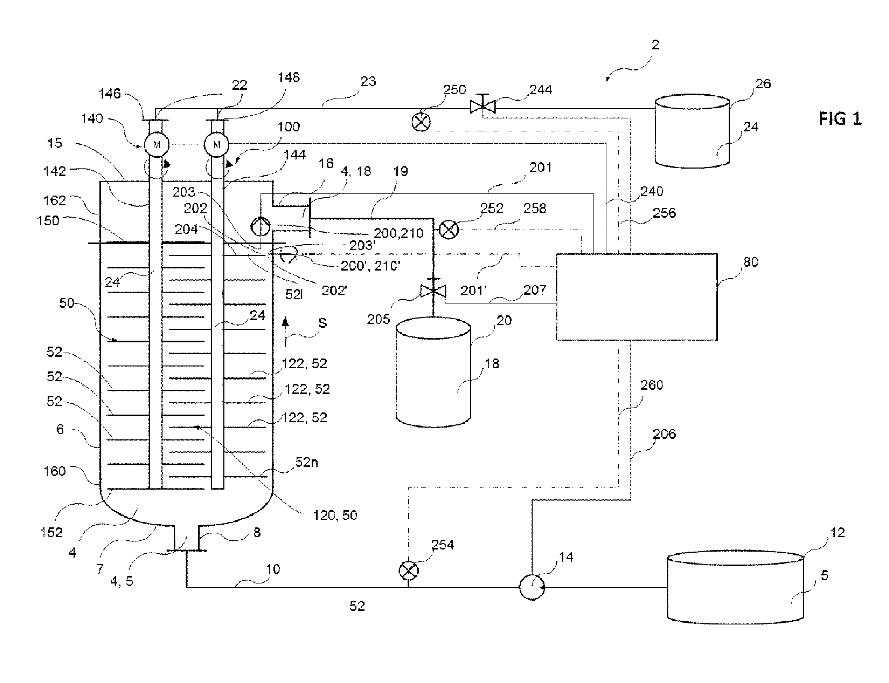

Die in der Figur 1 dargestellte dynamische Querstromfiltrationsvorrichtung 2 zum Filtrieren einer Flüssigkeit-Feststoff-Suspension 4 weist auf einen Behälter 6, der an einem unteren Behälterendabschnitt 7, z.B. an seinem unteren Behälterende, einen Feed-Eintragsanschluss 8 hat, über welchen die Suspension 4 in Form von oder als Feed 5 in den Behälter 6 eintragbar ist. Hierzu ist an den Feed-Eintragsanschluss 8 eine Feed-Zuführleitung 10 angeschlossen, welche ihrerseits mit einem Feed-Reservoir 12 sowie mit einer Pumpe 14 verbunden ist, welche die Suspension 4 in Form des Feeds 5 von dem Feed-Reservoir 12 über die Feed-Zuführleitung 10 in den Behälter 6 pumpt.

Der Behälter 6 hat ferner an seinem oberen Behälterendabschnitt 15, z.B. an einem oberen Behälterende, einen Retentat-Austragsanschluss 16, über welchen das Retentat 18, welches im Rahmen eines im Behälter 6 erfolgenden Filtrationsvorgangs von der eingangs zugeführten Suspension 4, d.h. dem Feed 5, verbleibt, aus dem Behälter 6 austragbar ist. Hierzu ist an den Rententat-Austragsanschluss 16 eine Retentat-Abführleitung 19 angeschlossen, welche ihrerseits mit einem Retentat-Aufnahmebehälter 20 zum Aufnehmen des Retentats 18 verbunden ist.

Der Behälter 6 hat ferner an seinem oberen Behälterendabschnitt 15, z.B. an seinem oberen Behälterende, einen Permeat-Austragsanschluss 22, über welchen das Permeat 24, welches im Rahmen des im Behälter 6 erfolgenden Filtrationsvorgangs aus der Suspension 4 heraus filtriert wird, aus dem Behälter 6 austragbar ist. Hierzu ist an den Permeat-Austragsanschluss 22 eine Permeat-Abführleitung 23 angeschlossen, welche ihrerseits mit einem Permeat-Aufnahmebehälter 26 zum Aufnehmen des Permeats 24 verbunden ist.

Die dynamische Querstromfiltrationsvorrichtung 2 gemäß dem Ausführungsbeispiel von Figur 1 weist ferner eine (erste) Filtermembran-Anordnung 50 auf, die im Behälter 6 angeordnet ist und die eine Mehrzahl von Filtermembranen 52 in Form von Filtermembran-Scheiben, z.B. Keramik-Filtermembran-Scheiben, hat zum Durchführen des Filtrationsvorgangs. Die Filtermembranen 52 sind mit dem Permeat-Austragsanschluss 22 fluidverbunden sind und in Richtung vom Feed-Eintragsanschluss 8 aus zum Retentat-Austragsanschluss 18 hin gesehen aufeinanderfolgend angeordnet, um dementsprechend aufeinanderfolgend von der im Behälter 6 vorliegenden Suspension 4 in einer Durchströmungsrichtung (Pfeil S) umströmt zu werden.

Die dynamische Querstromfiltrationsvorrichtung 2 gemäß dem Ausführungsbeispiel von Figur 1 weist ferner eine Steuereinrichtung 80 auf zum Steuern des Filtrationsbetriebs der Querstromfiltrationsvorrichtung 2.

Ferner weist die dynamische Querstromfiltrationsvorrichtung 2 gemäß dem Ausführungsbeispiel von Figur 1 eine Membran-Reinigungseinrichtung 100 auf zum Reinigen der Filtermembranen 52 während des regulären Filtrationsbetriebs, welche aufweist eine Kammeinrichtung 120 mit einer Mehrzahl von Kammelementen 122, die mit den Filtermembranen 52 der Filtermembran-Anordnung kämmen und die ihrerseits jeweils als Filtermembranen 52 in Form von Filtermembran-Scheiben, z.B. Keramik-Filtermembran-Scheiben, ausgebildet sind, sodass auch die Kammeinrichtung 120 in dieser Ausführungsform eine (zweite) Filtermembran-Anordnung 50 bildet. Die Membran-Reinigungseinrichtung 100 hat ferner eine Bewegungseinrichtung 140, die mit der (ersten) Filtermembran-Anordnung 50 und mit der Kammeinrichtung 120 (und damit mit der zweiten Filtermembran-Anordnung 50) verbunden ist, um die Filtermembranen 52 und die Kammelemente 122 während des regulären Filtrationsbetriebs permanent relativ zueinander sowie jeweils relativ zur im Behälter 6 vorliegenden Suspension 4 bewegen zu können.

Die Bewegungseinrichtung 140 hat in diesem Ausführungsbeispiel einen ersten und einen zweiten Antriebsmotor M, M, eine erste Drehwelle 142, die von dem ersten Antriebsmotor M drehend angetrieben wird, und eine zweite Drehwelle 144, die von dem zweiten Antriebsmotor M drehend angetrieben wird. Die Antriebsmotoren M, M sind zum Beispiel Elektromotoren. Die Drehwellen 142, 144 erstrecken sich von dem Feed-Eintragsanschluss 8 aus zu dem Retentat-Austragsanschluss 16 im Wesentlichen parallel zu einander. In diesem Ausführungsbeispiel sind die Drehwellen 142, 144 vertikal verlaufend im Behälter angeordnet. Anstelle zweier Antriebsmotoren M, M kann auch nur ein einziger Antriebsmotor M vorgesehen sein, welcher sowohl mit der ersten als auch mit der zweiten Drehwelle 142, 144 verbunden ist.

Die Filtermembranen 52 der Filtermembran-Anordnung 50 sind auf der ersten Drehwelle 142 in regulären Axialabständen voneinander entlang der ersten Drehwelle 142 (drehfest) angeordnet, und die mit den Filtermembranen 52 kämmenden Kammelemente 122 der Kammeinrichtung 120 sind auf der zweiten Drehwelle 144 in regulären Axialabständen voneinander entlang der zweiten Drehwelle 144 (drehfest) angeordnet. Die Drehwellen 142, 144 sind jeweilig als Hohlwellen ausgebildet, zu denen das über die Filtermembranen 52 ausfiltrierte Permeat 24 geführt ist, um dann in den Drehwellen 142, 144 zum Permeat-Austragsanschluss 22 geführt zu werden. Die Drehwellen 142, 144 sind aus dem Behälter 6 in abgedichteter Weise herausgeführt und haben an ihrem dem Permeat-Austragsanschluss 22 zugewandten Ende eine jeweilige Austrittsöffnung 146, 148, an welcher und/oder von welcher der Permeat-Ausraganschluss 22 ausgebildet ist.

Wie aus der Figur 1 ersichtlich ist, drehen die Antriebsmotoren M, M (oder der eine Antriebsmotor M) die Drehwellen 142, 144 in die gleiche Drehrichtung, sodass die sich überlappenden Filtermembranen 52 und Kammelemente 122 in ihrem Überlappungsbereich gegensinnige Umfangs-Bewegungsrichtungen haben, um dadurch Turbulenzen zu erzeugen, welche die Außenflächen der Filtermembranen 52 bzw. der Kammelemente 122 reinigen helfen.

Die in Durchströmungsrichtung S gesehen erste und letzte Scheibe 150, 152 sind nicht als Filtermembranen ausgebildet, sondern werden z.B. von einer jeweiligen Stahlscheibe gebildet.

Gemäß dem in Figur 1 gezeigten Ausführungsbeispiel sind der Feed-Eintragsanschluss 8 und der Retentat-Austragsanschluss 16 nicht miteinander verbunden, sodass keine Retentat-Rezirkulation, das heißt keine Rückführung von Retentat an den Suspension-Eintraganschluss 8 und damit zurück in den Behälter 6 stattfindet, wodurch sich im regulären Filtrationsbetrieb die Feststoff-Konzentration der Suspension 4 im Behälter 6 ausgehend von der dem Feed-Eintragsanschluss 8 nächstliegenden Filtermembran 52e (z.B. ersten Filtermembran) bis zu der dem Retentat-Austragsanschluss 16 nächstliegenden Filtermembran 52I (z.B. letzten Filtermembran) im Wesentlichen graduell erhöht.

Im Ausführbeispiel von Figur 1 ist der Behälter 6 als zweiteiliger Behälter ausgebildet, mit einem unteren Behältertopfteil 160 und einem Behälterdeckelteil 162, welche über einen Flanschabschnitt 164 in abgedichteter Weise lösbar aneinander befestigt sind.

Die dynamische Querstromfiltrationsvorrichtung gemäß dem Ausführungsbeispiel von Figur 1 weist ferner eine Suspensionscharakteristik-Erfassungsvorrichtung 200 auf, mittels deren eine zur Feststoffkonzentration der (im Behälter 6 vorliegenden) Suspension 4 korrelierende Suspensionscharakteristik lokal an einer Erfassungsposition 202 im Behälter 6 erfassbar ist, welche im Bereich des ausgehend von dem Feed-Eintragsanschluss 8 aus zum Retentat-Austragsanschluss 16 hin gesehen letzten Viertels der Mehrzahl der Filtermembranen 52 liegt, wobei die Erfassungsposition 202 in der in Figur 1 gezeigten Ausführungsform unmittelbar an der ausgehend von dem Feed-Eintragsanschluss 8 aus zum Retentat-Austragsanschluss 16 hin gesehen letzten Filtermembran 52I liegt, und zwar in diesem Falle unmittelbar an und/oder unmittelbar benachbart zu einer stromabwärtsseitigen hinteren Fläche 204 der letzten Filtermembran 52I sowie in einem radial äußeren, von der anderen (hier der ersten) Drehwelle 142 bzw. vom Überlappungsbereich der Filtermembranen 52 abgewandten Bereich der letzten Filtermembran 52I liegt.

Die Suspensionscharakteristik-Erfassungsvorrichtung 200 ist über eine Signalleitung 201 mit der Steuereinrichtung 80 verbunden, und die Steuereinrichtung 80 ist eingerichtet, um auf Basis der von der Suspensionscharakteristik-Erfassungsvorrichtung 200 erfassten Suspensionscharakteristik die Querstromfiltrationsvorrichtung zu steuern, und zwar z.B. um die Suspensionscharakteristik der Suspension 4 an der Erfassungsposition 202 geregelt einzustellen. Das Steuern kann z.B. erfolgen, indem die Steuereinrichtung 80 die an der Feed-Zuführleitung 10 angeordnete Pumpe 14 gemäß der erfassten Suspensionscharakteristik zum geregelten Erzeugen/Bereitstellen eines größeren oder kleineren Feed-Zuführmassenstrom in den Behälter 6 steuert/regelt, wozu die Steuereinrichtung 80 z.B. über eine Steuerleitung 206 mit der Pumpe 14 verbunden, und/oder indem die Steuereinrichtung 80 den Retentat-Abführmassenstrom bzw. die Retentat-Abführstromflussrate in der Retentat-Abführleitung 19 steuert, z.B. mittels eines Absperrventils 205, das über eine Steuerleitung 207 mit der Steuereinrichtung 80 verbunden ist.

Die Steuereinrichtung 80 erhöht z.B. die Retentat-Abführrate (bzw. den Retentat-Abführmassenstrom) durch die Retentat-Abführleitung 19 bzw. durch den Retentat-Abführanschluss 16 und/oder die Feed-Zuführrate (bzw. den Feed-Zuführmassenstrom) durch die Feed-Zuführleitung 10 bzw. durch den Feed-Zuführanschluss 8, wenn die Feststoffkonzentration, z.B. erfasst als Viskosität, der an der Erfassungsposition vorliegenden Suspension zu hoch ist, z.B. einen vorbestimmten Grenzwert erreicht und/oder überschreitet, und verringert z.B. die Retentat-Abführrate durch die Retentat-Abführleitung 19 bzw. durch den Retentat-Abführanschluss 16 und/oder die Feed-Zuführrate durch die Feed-Zuführleitung 10 bzw. durch den Feed-Zuführanschluss 8, wenn die Feststoffkonzentration, z.B. erfasst als Viskosität, der an der Erfassungsposition vorliegenden Suspension zu niedrig ist, z.B. einen vorbestimmten (unteren) Grenzwert erreicht und/oder unterschreitet (bzw. negativ überschreitet)

Gemäß einer anderen Ausführungsform kann alternativ die Suspensionscharakteristik-Erfassungsvorrichtung 200' derart vorgesehen sein, dass die zugehörige Erfassungsposition 202' unmittelbar an einer radialen Stirnseite sowie in dem radial äußeren, von der anderen (hier der ersten) Drehwelle 142 bzw. vom Überlappungsbereich der Filtermembranen 52 abgewandten Bereich der letzten Filtermembran 52I liegt.

Die Suspensionscharakteristik-Erfassungsvorrichtung 200, 200' hat zum Beispiel einen oder mehrere Messsensoren 210, 210', der/die an und/oder in der Erfassungsposition 200, 200' oder in jeweiligen Erfassungspositionen 200, 200' angeordnet ist/sind, so dass mittels dessen/deren Hilfe die Suspensionscharakteristik/Suspensionscharakteristiken in situ an der Erfassungsposition/den Erfassungspositionen 200, 200' erfassbar ist/sind. Hierbei kann der Messsensor 210 komplett im Behälter 6 angeordnet sein, wobei der Messsensor 210 über eine vom Messsensor 210 ausgehend aus dem Behälter 6 herausgeführte Signalleitung 201 mit der Steuereinrichtung 80 verbunden sein kann. Der Messsensor 210' kann teilweise außen am Behälter 6 angeordnet sein, wobei z.B. ein Messfühler 203' des Messsensors 210' permanent in den Behälter ragt. Der Messsensor 200 kann z.B. an dem abnehmbaren Behälterdeckelteil 162 mit diesem abnehmbar angebracht sein.

Gemäß einer Struktur, die keine In-Situ-Erfassung der Suspensionscharakteristik erlaubt, kann der Messsensor auch komplett außerhalb des Behälters 6 angeordnet sein (nicht dargestellt), wobei z.B. eine Fluidleitung die Erfassungsposition 202, 202' mit dem Messsensor verbindet, um Suspension 4 von der Erfassungsposition 202, 202' mittels des Messsensors außerhalb des Behälters analysieren zu können.

Im in Figur 1 gezeigten Ausführungsbeispiel ist der jeweilige Messsensor 200, 200' als ein Viskositätssensor ausgebildet, mittels dessen die Suspensionsviskosität als die Suspensionscharakteristik an der jeweiligen Erfassungsposition 202, 202' in situ erfassbar ist, wobei der jeweilige Viskositätssensor hier z.B. einen mechanischer Biegefühler 203, 203' als Messfühler hat, welcher aufgrund der Suspensionsströmung an der Erfassungsposition 202, 202' eine Biegung erfährt, welche erfassbar ist und aus welcher die Suspensionsviskosität ermittelbar ist.

Die Steuereinrichtung 80 ist z.B. über eine Motorsteuerleitung 240 mit dem oder den Antriebsmotoren M, M verbunden, um diese zu steuern, z.B. auf Basis der an der Erfassungsposition 202, 202' erfassten Suspensions-Charakteristik. Ferner ist die Steuereinrichtung 80 z.B. über eine Ventilsteuerleitung 242 mit einem an bzw. in der Permeat-Abführleitung 23 angeordneten Absperrventil 244 verbunden, um dieses z.B. zur Erzeugung eines Umkehrflusses an den Filtermembranen 52 durch Absperren und dadurch Druckerhöhen in der Permeat-Abführleitung 242 anzusteuern. Die Steuereinrichtung 80 kann z.B. derart eingerichtet sein, dass von ihr, falls die erfasste Viskosität z.B. einen vorbestimmten Maximalgrenzwert erreicht und/oder überschreitet, der oder die Antriebsmotoren M, M sofort langsamer betrieben oder notabgeschaltet wird/werden.

Ferner können z.B. an der Permeat-Abführleitung 23, an der Retentat-Abführleitung 19 und an der Feed-Zuführleitung 10 jeweilige Drucksensoren 250, 252, 254 angeordnet sein, um die Drücke in diesen Leitungen zu messen und entsprechende Drucksignale über jeweils zugehörige Signalleitungen 256, 258, 260 an die Steuereinrichtung 80 zu übermitteln, welche auf Basis der damit erfassten Drücke den Betrieb der Filtrationsvorrichtung, z.B. den regulären Filtrationsbetrieb der Filtrationsvorrichtung, ferner steuert bzw. regelt.

Die Steuereinrichtung 80 ist z.B. eine elektronische Steuervorrichtung, die z.B. in Form eines Mikroprozessors ausgebildet ist oder einen Mikroprozessor aufweist.

Bei einer nicht dargestellten Alternative können die Kammelemente 122, anstelle auf der zur ersten Drehwelle 142 parallelen zweiten Drehwelle 144 angeordnet zu sein (wie bei der Ausführungsform von Fig. 1), auch z.B. koaxial zu den Filtermembranen 52 auf derselben, hier z.B. der ersten, Drehwelle 142 angeordnet sein, welche dann z.B. auch als feststehende Achse ausgebildet sein kann. Hierbei können die Kammelemente 122 zum Beispiel, anstatt als Kreisscheiben, auch als ein-, zwei-, drei- und/oder mehrblättrige Rotoren, z.B. Rotorplatten, ausgebildet sein, wobei jeweilige Rotorblätter z.B. sichelförmig ausgebildet sein können. Hierbei können die Filtermembranen 52 und die als Rotoren ausgebildeten Kammelemente 122 dann abwechselnd hintereinander auf der ersten Drehwelle 142 angeordnet sein, um dadurch miteinander kämmend angeordnet zu sein, und die Filtermembranen 52 und die Rotoren sind relativ zueinander drehbewegbar, wobei hierzu z.B. die Filtermembranen 52 oder die Rotoren drehend antreibbar sind.

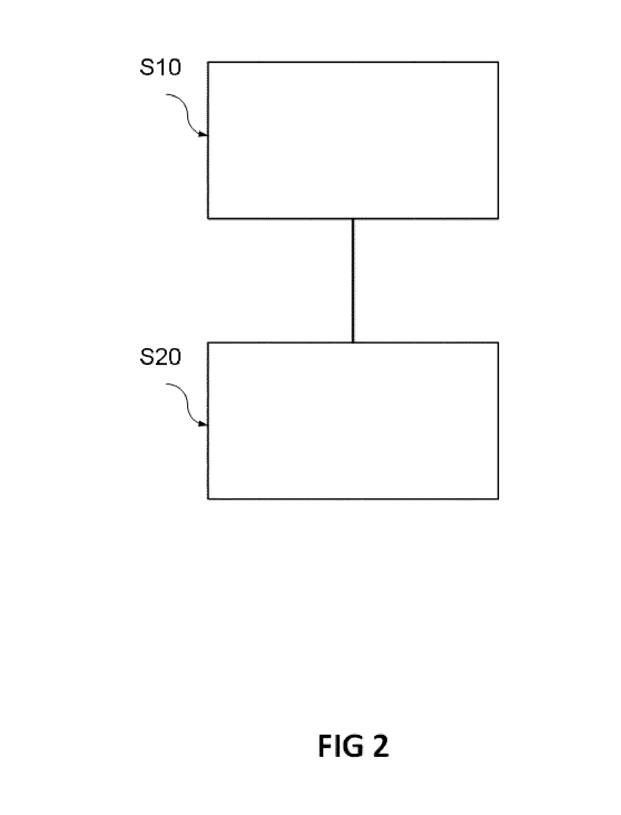

Figur 2 zeigt ein Flussdiagram eines Verfahrens zum Betreiben einer wie hierin beschriebenen dynamischen Querstromfiltrationsvorrichtung 2 gemäß einem Ausführungsführungsbeispiel der Erfindung, wobei im Rahmen einer Anlaufphase die Querstromfiltrationsvorrichtung 2 anhand der Steuereinrichtung 80 derart betrieben wird, dass die Feststoffkonzentration der im Behälter 6 vorliegenden Suspension 4 in Richtung von der dem Feed-Eintragsanschluss 8 nächstgelegenen Filtermembran 52n aus zu der dem Retentat-Austragsanschluss 16 nächstgelegenen Filtermembran 52I im Wesentlichen graduell ansteigend eingestellt wird, bis die Feststoffkonzentration der an der Erfassungsposition 202, 202' vorliegenden Suspension wenigstens 5% relativ gegenüber der Feststoffkonzentration des in den Behälter eingetragenen Feeds 5 erhöht ist (Schritt S10), und wobei im Rahmen eines sich an die Anlaufphase anschließenden regulären Filtrationsbetriebs die Querstromfiltrationsvorrichtung 2 anhand der Steuereinrichtung 80 derart betrieben wird, dass die im Rahmen der Anlaufphase eingestellte Feststoffkonzentration der an der Erfassungsposition vorliegenden Suspension im Wesentlichen (konstant oder innerhalb eines vorbestimmten Bereichs) aufrechterhalten wird (Schritt S20).

Wie oben erläutert kann das Einstellen des Gradienten der Feststoffkonzentration der Suspension 4 im Behälter 6 und/oder das Aufrechterhalten der Feststoffkonzentration der an der Erfassungsposition 202, 202' vorliegenden Suspension z.B. mittels Regelns des Feed-Zuführmassenstroms durchgeführt werden.

## Patentansprüche

1. Dynamische Querstromfiltrationsvorrichtung (2) zum Filtrieren einer Flüssigkeit-Feststoff-Suspension, aufweisend
einen Behälter (6), der einen Feed-Eintragsanschluss (8) hat, über welchen die Suspension (4) in Form eines Feeds (5) in den Behälter (6) eintragbar ist, und der einen Retentat-Austragsanschluss (16) hat, über welchen die Suspension (4) in Form eines Retentats (18), welches im Rahmen eines im Behälter erfolgenden Filtrationsvorgangs von dem Feed (5) verbleibt, aus dem Behälter (6) austragbar ist, und der einen Permeat-Austragsanschluss (22) hat, über welchen das Permeat (24), welches im Rahmen des im Behälter erfolgenden Filtrationsvorgangs aus der Suspension (4) heraus filtriert wird, aus dem Behälter austragbar ist,
eine Filtermembran-Anordnung (50), die im Behälter angeordnet ist und die eine Mehrzahl von Filtermembranen (52) zum Durchführen des Filtrationsvorgangs hat, die mit dem Permeat-Austragsanschluss (22) fluidverbunden sind und die in Richtung vom Feed-Eintragsanschluss (8) aus zum Retentat-Austragsanschluss (16) hin aufeinanderfolgend angeordnet sind, um dementsprechend aufeinanderfolgend von der Suspension (4) umströmt zu werden,
eine Steuereinrichtung (80) zum Steuern des Betriebs der Querstromfiltrationsvorrichtung, und
eine Membran-Reinigungseinrichtung (100) zum Reinigen der Filtermembranen (52) während des regulären Filtrationsbetriebs, welche aufweist eine Bewegungseinrichtung (140), welche mit der Filtermembran-Anordnung (50) verbunden ist, um die Filtermembranen (52) während des regulären Filtrationsbetriebs relativ zu der Suspension (4) bewegen zu können, und/oder welche aufweist eine Kammeinrichtung (120) mit einer Mehrzahl von Kammelementen (122), die mit den Filtermembranen (52) kämmen, und eine Bewegungseinrichtung (140), die mit der Filtermembran-Anordnung (52) und/oder mit der Kammeinrichtung (120) verbunden ist, um die Filtermembranen (52) und/oder die Kammelemente (122) während des regulären Filtrationsbetriebs relativ zueinander bewegen zu können, wobei
der Feed-Eintragsanschluss (8) und der Retentat-Austragsanschluss (16) im Wesentlichen nicht oder zumindest im regulären Filtrationsbetrieb im Wesentlichen nicht miteinander verbunden sind, sodass im Wesentlichen keine oder zumindest im regulären Filtrationsbetrieb im Wesentlichen keine Retentat-Rezirkulation stattfindet, wodurch im regulären Filtrationsbetrieb ausgehend von der dem Feed-Eintragsanschluss (8) nächstliegenden Filtermembran (52n) bis zu der dem Retentat-Austragsanschluss (16) nächstliegenden Filtermembran (52I) ein im Wesentlichen gradueller Anstieg der Feststoff-Konzentration der Suspension im Behälter vorliegt.

2. Dynamische Querstromfiltrationsvorrichtung (2) gemäß Anspruch 1, ferner aufweisend eine Suspensionscharakteristik-Erfassungsvorrichtung (200; 200'), mittels deren eine zur Feststoffkonzentration der Suspension korrelierende Suspensionscharakteristik lokal an einer Erfassungsposition (202; 202') erfassbar ist, welche im Behälter im Bereich des ausgehend von dem Feed-Eintragsanschluss (8) aus zum Retentat-Austragsanschluss (16) hin gesehen letzten Viertels der Mehrzahl der Filtermembranen (52) und/oder im Behälter (6) im Bereich des Retentat-Austragsanschlusses (16), optional benachbart zu diesem, und/oder außerhalb des Behälters im Bereich des Retentat-Austragsanschlusses (16), optional benachbart zu diesem, und/oder außerhalb des Behälters (6) in einer an den Retentat-Austragsanschluss (16) angeschlossenen Retentat-Abführleitung (19) liegt, wobei die Erfassungsposition (202; 202') optional unmittelbar an einer ausgehend von dem Feed-Eintragsanschluss (8) aus zum Retentat-Austragsanschluss (16) hin gesehen letzten und/oder vorletzten Filtermembran (52I) liegt, wobei weiter optional die letzte und/oder die vorletzte, optional alle, Filtermembran/en (52) platten- oder scheibenförmig ausgebildet ist/sind und die Erfassungsposition (202; 202') unmittelbar an einer stromabwärtsseitigen hinteren Fläche (204) und/oder unmittelbar an einer radialen Stirnseite der letzten und/oder vorletzten Filtermembran (52I) liegt, wobei die Suspensionscharakteristik-Erfassungsvorrichtung (200; 200') mit der Steuereinrichtung (80) verbunden ist, und die Steuereinrichtung (80) eingerichtet ist, um auf Basis der von der Suspensionscharakteristik-Erfassungsvorrichtung erfassten Suspensionscharakteristik die Querstromfiltrationsvorrichtung (2) zu steuern.

3. Dynamische Querstromfiltrationsvorrichtung (2) gemäß Anspruch 2, wobei die Suspensionscharakteristik-Erfassungsvorrichtung (200; 200') einen Messsensor (210, 210') aufweist, der an und/oder in der Erfassungsposition (202, 202') angeordnet ist, so dass mittels dessen Hilfe die Suspensionscharakteristik in situ an der Erfassungsposition erfassbar ist, wobei der Messsensor optional ein Viskositätssensor ist, mittels dessen die Suspensionsviskosität als die Suspensionscharakteristik an der Erfassungsposition erfassbar ist, wobei der Viskositätssensor optional einen mechanischen Biegefühler (203; 203') hat, welcher aufgrund der Suspensionsströmung an der Erfassungsposition eine Biegung erfährt, welche erfassbar ist und aus welcher die Suspensionsviskosität ermittelbar ist.

4. Dynamische Querstromfiltrationsvorrichtung (2) gemäß einem der Ansprüche 2 bis 3, wobei die Steuereinrichtung (80) derart eingerichtet ist, dass von ihr auf Basis der erfassten Suspensionscharakteristik diese Suspensionscharakteristik ihrerseits und optional damit die Feststoff-Konzentration der Suspension (4) an der Erfassungsposition (202; 202') geregelt einstellbar ist und/oder dass von ihr auf Basis der erfassten Suspensionscharakteristik ein Austragmassenstrom des Retentats (18) aus dem Behälter (6) und/oder ein Eintragsmassenstrom des Feeds (5) in den Behälter (6) und/oder ein Austragmassenstrom des Permeats (24) aus dem Behälter einstellbar ist und/oder dass von ihr, falls die erfasste Suspensionscharakteristik einen vorbestimmten Grenzwert übersteigt, der reguläre Filtrationsbetrieb der Querstromfiltrationsvorrichtung langsamer betreibbar oder notabschaltbar ist.

5. Dynamische Querstromfiltrationsvorrichtung (2) gemäß einem der Ansprüche 1 bis 4, wobei die Filtermembran-Anordnung (50) eine erste Filtermembran-Anordnung darstellt, und wobei die Querstromfiltrationsvorrichtung ferner aufweist die Kammeinrichtung (120) mit einer Mehrzahl von Kammelementen (122), die mit den Filtermembranen (52) kämmen, und die Bewegungseinrichtung (140), die mit der Filtermembran-Anordnung (50) und mit der Kammeinrichtung (120) verbunden ist, wobei die Bewegungseinrichtung (140 eine erste Drehwelle (142) aufweist und die Filtermembranen (52) der ersten Filtermembran-Anordnung (50) als Filterscheiben, optional als Kreisfilterscheiben, ausgebildet sind, die auf der ersten Drehwelle (142) hintereinander in einem jeweiligen Axialabstand voneinander drehfest angeordnet sind, wobei die Kammeinrichtung (120) als eine zweite Filtermembran-Anordnung (50) ausgebildet ist, wobei die Bewegungseinrichtung (140) eine zweite Drehwelle (144) aufweist und die Mehrzahl von Kammelementen (122) jeweils als Filtermembranen (52) in Form von Filterscheiben, optional als Kreisfilterscheiben, ausgebildet sind, die auf der zweiten Drehwelle (144) hintereinander in einem jeweiligen Axialabstand voneinander drehfest angeordnet sind, und wobei die Bewegungseinrichtung (140) einen Motor (M) zum Drehantreiben der ersten und der zweiten Drehwelle (142, 144) hat.

6. Dynamische Querstromfiltrationsvorrichtung (2) gemäß Anspruch 5, wobei die Drehwellen (142, 144) in dem Behälter (6) vertikal angeordnet sind und sich von einem unteren Behälterende (7) zu einem oberen Behälterende (15) erstrecken, und wobei der Feed-Eintragsanschluss (8) an dem unteren Behälterende (7) angeordnet ist und der Retentat-Austragsanschluss (16) an dem oberen Behälterende (15) angeordnet ist.

7. Dynamische Querstromfiltrationsvorrichtung (2) gemäß Anspruch 5 oder 6, insofern auf Anspruch 2 rückbezogen, wobei die Erfassungsposition (202, 202') unmittelbar an der stromabwärtsseitigen hinteren Fläche (203) und/oder der Stirnseite in einem radial äußeren sowie von der jeweilig anderen Drehwelle (142) abgewandten Bereich der letzten Filterscheibe (52I) angeordnet ist.

8. Dynamische Querstromfiltrationsvorrichtung (2) gemäß einem der Ansprüche 1 bis 7, welche derart eingerichtet und konfiguriert ist, dass im regulären Filtrationsbetrieb die Feststoffkonzentration der an der Erfassungsposition (202, 202') vorliegenden Suspension (4) um wenigstens 5% relativ gegenüber der Feststoffkonzentration des in den Behälter (6) eingetragenen Feeds (5) erhöht ist.

9. Verwendung einer dynamischen Querstromfiltrationsvorrichtung (2) gemäß einem der Ansprüche 1 bis 8 zum Ausfiltrieren von Weinfluid aus Gärrückständen, welche die zu filtrierende Suspension bilden und welche im Rahmen einer Vergärung von Früchtesaft und/oder Früchtemaische bei der Weinherstellung auftreten.

10. Verfahren zum Betreiben einer dynamischen Querstromfiltrationsvorrichtung gemäß einem der Ansprüche 1 bis 8, wobei im Rahmen einer Anlaufphase die Querstromfiltrationsvorrichtung (2) anhand der Steuereinrichtung (80) derart betrieben wird, dass die Feststoffkonzentration der im Behälter (6) vorliegenden Suspension (4) von der dem Feed-Eintragsanschluss (8) nächstgelegenen Filtermembran (52n) aus zu der dem Retentat-Austragsanschluss (16) nächstgelegenen Filtermembran (16) im Wesentlichen graduell ansteigend eingestellt wird, bis die Feststoffkonzentration der an der Erfassungsposition (202, 202') vorliegenden Suspension um wenigstens ungefähr 5% relativ gegenüber der Feststoffkonzentration des in den Behälter eingetragenen Feeds (5) erhöht ist, und wobei im Rahmen eines sich an die Anlaufphase anschließenden regulären Filtrationsbetriebs die Querstromfiltrationsvorrichtung (2) anhand der Steuereinrichtung (80) derart betrieben wird, dass die im Rahmen der Anlaufphase eingestellte Feststoffkonzentration der an der Erfassungsposition (202; 202') vorliegenden Suspension im Wesentlichen aufrechterhalten wird.

11. Verfahren gemäß Anspruch 10, wobei das Einstellen des Gradienten der Feststoffkonzentration der Suspension (4) im Behälter (6) und/oder das Aufrechterhalten der Feststoffkonzentration der an der Erfassungsposition (202, 202') vorliegenden Suspension mittels Regelns des Retentat-Abführmassenstroms durchgeführt werden/wird.
